# EUROPÄISCHE PATENTANMELDUNG

(11) **EP 2 535 099 A2**
(43) Veröffentlichungstag der Anmeldung: **19.12.2012**
(21) Anmeldenummer: 12171735.9
(22) Anmeldetag: 13.06.2012
(51) Int. Cl.: B01D 46/24, B01D 46/00, B01D 46/42, F02M 35/00

(54) **Luftfilterelement, Filtergehäuse und Filteranordnung**

(30) Priorität: 15.06.2011 DE 102011106503
(71) Anmelder: MANN + HUMMEL GMBH, 71638 Ludwigsburg (DE)
(72) Erfinder: Kaufmann, Michael, 67149 Meckenheim (DE); Ruhland, Klaus-Dieter, 67149 Meckenheim (DE)

(57) **Zusammenfassung**

Es wird ein Luftfilterelement (10) mit einem zylindrischen Mittelrohr (11) bereitgestellt, wobei am einen Ende des Mittelrohrs (11) eine Einrichtung (18) zur Übertragung eines Drehmoments von einem Werkzeug an das Luftfilterelement (10) vorgesehen ist, und am anderen Ende des Mittelrohrs (11) eine Befestigungseinrichtung (14) zum lösbaren Einbau des Filterelements (10) in einen zylindrischen Stützkörper (21) mittels einer Steck-Dreh-Bewegung vorgesehen ist.

## Beschreibung

### Technisches Gebiet

Die vorliegende Erfindung bezieht sich auf ein Filterelement zur Filterung von Luft, auf ein Gehäuse für ein solches Filterelement, sowie eine Filteranordnung mit einem solchen Filterelement und Gehäuse.

### Stand der Technik

Filterelemente finden zum Filtern von Fluidströmungen oder gasförmigen Medien Verwendung. Beispielsweise kommen sie bei der Filterung einer Luftströmung zum Einsatz, die in einen Insassenraum eines Kraftfahrzeugs geleitet wird. Hierzu können sie insbesondere in einer im Kraftfahrzeug eingebauten Klimaanlage verwendet werden, um Außenluft von gesundheitsschädlichen Stoffen, Gerüchen und dergleichen zu reinigen. Beispiele für solche Filter sind Partikelfilter, Geruchsfilter oder Kombinationen derselben. Ein weiteres Anwendungsgebiet von Filterelementen sind Luftfilter, welche Luft, die einer Brennkraftmaschine zugeführt wird, von Schwebstoffen befreien. In der Regel weisen solche Luftfilter ein Gehäuse auf, in welchem ein austauschbares Luftfilterelement vorgesehen ist.

Das US-Patent US 4,588,426 offenbart einen Luftfilter mit einem Filtergehäuse, an dessen Boden mehrere vertikal angeordnete Stangen vorgesehen sind. Über die Stangen kann ein Filterelement geschoben werden, und das Filtergehäuse kann mit einer Abdeckung geschlossen werden. Die Abdeckung wird mit einer bis zum Boden des Filtergehäuses reichenden Flügelschraube verschraubt. Der Austausch des Filterelements kann somit in einfacher Weise vorgenommen werden, da der Deckel durch einfaches Lösen der Flügelschraube abgenommen, und das Filterelement von Hand ausgetauscht werden kann, ohne dass hierzu ein weiteres Werkzeug benötigt wird. Allerdings ist es oft wünschenswert, dass ein solcher einfacher Austausch ohne Werkzeug eben gerade nicht möglich ist, da er die Gefahr birgt, dass das Filterelement vom Endverbraucher in nicht sachgemäßer Weise, oder unter Verwendung des falschen Filterelements ausgetauscht wird. Dies kann wiederum dazu führen, dass eine nur unzureichende Filterung durchgeführt wird, oder dass das Filtermaterial schneller verschleißt.

Die WO 00/56423 A1 offenbart einen Luftfilter mit zwei topfförmigen Gehäuseschalen, die lösbar miteinander verbunden sind, wobei in die untere der Schalen ein konisches Stützrohr integriert ist. Über dieses Stützrohr wird ein konisches Rundfilterelement geschoben, wonach die obere Gehäuseschale auf die untere Gehäuseschale gesetzt und mit einem Ende des Stützrohres verschraubt wird. Zwar sind bei diesem Luftfilter die Gehäuseschalen miteinander verschraubt, so dass ein werkzeugloses Lösen nicht möglich ist, allerdings kann die Verschraubung durch einen Schraubendreher erfolgen, so dass auch hier die Gefahr eines nicht sachgemäßen Austauschs des Filterelements mit den vorgenannten Nachteilen besteht.

Es ist daher Aufgabe der Erfindung, ein verbessertes Luftfilterelement, ein Filtergehäuse für ein solches Filterelement sowie eine Filteranordnung zu schaffen, welche einfach aufgebaut und herstellbar sind und gleichzeitig gewährleisten, dass das im Filtergehäuse aufgenommene Filterelement nicht, oder nur schwer, ohne ein Werkzeug, insbesondere ein Spezialwerkzeug ausgetauscht werden kann.

### Offenbarung der Erfindung

Diese Aufgabe wird durch ein Luftfilterelement mit den Merkmalen des Patentanspruchs 1 gelöst.

Demgemäß ist ein Luftfilterelement vorgesehen mit einem zylindrischen Mittelrohr, wobei am einen Ende des Mittelrohrs eine Drehmomentübertragungseinrichtung zur Übertragung eines Drehmoments von einem Werkzeug an das Luftfilterelement vorgesehen ist, und am anderen Ende des Mittelrohrs eine Befestigungseinrichtung zum lösbaren Einbau des Filterelements in einen zylindrischen Stützkörper mittels einer Steck-Dreh-Bewegung vorgesehen ist.

Beispiele für Verbindungen mittels einer Steck-Dreh-Bewegung sind Schraub-, Bajonett-, Rast- und/oder Schnappverbindungen. Ein Vorteil von Steck-Dreh-Verbindungen gegenüber Steck-Rast-Verbindungen ist, dass sie sich weniger leicht durch Vibrationen lösen, was insbesondere für den Einsatz in Lastkraftwagen, Baumaschinen, landwirtschaftlichen Maschinen und dergleichen vorteilhaft ist. Das eingebaute Luftfilterelement kann nicht, oder nur schwer, von Hand aus dem Stützkörper entnommen werden, da es im Stützkörper aufgenommen und somit sein äußerer Umfang vom Stützkörper abgedeckt ist. Der Stützkörper kann dadurch insbesondere auch einen mechanischen Schutz des Filterelements vor Beschädigungen bieten. Dies kann insbesondere bei tragbaren Geräten von Bedeutung sein, bei welchen ein sicherer Stand des Geräts beim Filterwechsel nicht immer gewährleistet ist und deshalb die Gefahr der Beschädigung von Filterelementen besteht, wenn die Geräte bei geöffnetem Filtergehäuse zu Boden fallen. Die Kombination der Befestigungsmittel mit der Drehmomentsübertragungseinrichtung ergibt ein Filterelement, welches mit Hilfe eines Werkzeugs durch eine einfache Bewegung in einem Stützkörper befestigt bzw. gelöst werden kann, ohne Werkzeug jedoch nur schwerlich befestigt bzw. gelöst werden kann.

Weitere Ausgestaltungen des Filterelements sind in den abhängigen Patentansprüchen angegeben.

Bei entsprechender Ausgestaltung des Werkzeugs ist es zur Übertragung eines Drehmoments ausreichend, wenn am Ende des Filterelements ein nicht rotationssymmetrischer Abschnitt als Drehmomentsübertragungseinrichtung ist. Die Drehmomentsübertragungseinrichtung kann dabei als in Bezug auf die Zylinderachse des Mittelrohrs nicht rotationssymmetrische Erhebung oder Ausnehmung ausgebildet sein. Z.B. kann auf einem das Mittelrohr abschließenden Deckel eine vieleckige Ausnehmung vorgesehen sein, oder es können Wülste oder Auskragungen auf dem Deckel vorgesehen sein, die ein Einschrauben mittels Werkzeug ermöglichen.

An dem einen Ende des Mittelrohrs kann eine Endscheibe vorgesehen sein, die eine wannenförmige Vertiefung aufweist, an dessen Boden die Drehmomentsübertragungseinrichtung vorgesehen ist. Unter einer wannenförmig Vertiefung ist hierbei eine sacklochartige Vertiefung zu verstehen, deren Durchmesser größer als ihre Tiefe ist. Die Drehmomentsübertragungseinrichtung kann dabei insbesondere als Erhebung ausgebildet sein, die sich vom Boden der Vertiefung in der Endscheibe erhebt, jedoch unterhalb des oberen Randes der Endscheibe liegt. Die in der Vertiefung der Endscheibe vorgesehenen Erhebungen dienen als Mittel zur Übertragung eines Drehmoments eines speziell hierfür ausgebildeten Werkzeugs. Da diese Erhebungen in einer Vertiefung vorgesehen sind, sind sie nicht geeignet für ein händisches Herausdrehen bzw. Entnehmen des Luftfilterelements aus dem Stützkörper. Somit kann sichergestellt werden, dass das Luftfilterelement nicht, oder nur schwer, ohne ein entsprechendes Spezialwerkzeug aus dem Stützkörper entnommen werden kann, und ein nicht sachgemäßer Austausch des Luftfilterelements kann verhindert werden. Die wannenförmige Vertiefung kann von oben betrachtet kreisrund sein, was den Einsatz des Werkzeuges erleichtert.

Die Seitenflächen der Erhebungen können einen im Wesentlichen rechten Winkel, also z.B. einen Winkel von 75 bis 105 Grad mit der Bodenfläche der Vertiefung bilden. Ferner kann die Vertiefung von oben betrachtet kreisförmig sein. Die Seitenflächen der Erhebungen können sich im Wesentlichen in radialer Richtung vom Rand der Vertiefung in Richtung zur Zylinderachse des Mittelrohrs erstrecken. Somit kann eine große Kontaktfläche zwischen dem Spezialwerkzeug und den Vorsprüngen sichergestellt werden, und ein Abrutschen des Spezialwerkzeugs auf den Vorsprüngen vermieden werden.

Das Luftfilterelement kann beispielsweise mit mindestens zwei Erhebungen versehen sein. Die Erhebungen können ferner einander gegenüberliegend am Rand der Vertiefung vorgesehen sein. Somit können relativ kurze Erhebungen als Mittel zur Übertragung eines Drehmoments eines Spezialwerkzeugs vorgesehen werden, was eine händische Entnahme des Luftfilterelements weiter erschwert.

Beispielsweise kann die Länge der sich in radialer Richtung erstreckenden Seitenflächen der Erhebungen weniger als die Hälfte des Radius der Vertiefung betragen. Die Erhebungen können beispielsweise einander gegenüberliegend am Rand der Vertiefung vorgesehen sein. Dies ermöglicht eine effiziente Übertragung eines Drehmoments auf das Luftfilterelement.

Die Endscheibe und das Mittelrohr können einstückig ausgebildet sein. Dies ermöglicht eine einfache und kostengünstige Herstellung des Filterelements ohne zusätzliche Dichtungen, beispielsweise durch Spritzguss.

Die Aufgabe wird ferner durch ein Filtergehäuse mit den Merkmalen des Patentanspruchs 6 gelöst.

Demgemäß ist ein Filtergehäuse zur Aufnahme eines oben beschriebenen Luftfilterelements vorgesehen, umfassend ein Gehäuseoberteil und ein lösbar mit dem Gehäuseoberteil verbindbares Gehäuseunterteil, wobei am Gehäuseunterteil ein luftdurchlässiger zylindrischer Stützkörper vorgesehen ist, an dessen dem Gehäuseunterteil zugewandten Ende mit den filterseitigen Befestigungseinrichtungen des Luftfilterelements zusammenwirkende gehäuseseitige Befestigungsmittel zur Befestigung des Luftfilterelements mittels einer Steck-Dreh-Bewegung vorgesehen sind.

Das Gehäuseunterteil kann einstückig mit dem zylindrischen Stützkörper ausgebildet sein. Dies schafft einerseits eine größere Druckbeständigkeit, und gewährleistet andererseits eine bessere Handhabbarkeit beim Ein- bzw. Ausbau. Ferner kann das Filtergehäuse somit einfach und kostengünstig hergestellt werden.

Der zylindrische Stützkörper kann als luftdurchlässiges Gitter ausgebildet sein. Dies stellt eine relative hohe Stabilität des Stützkörpers sicher, wobei die relativ große Außenfläche des Stützkörpers für den Luftfluss durch den Filter genutzt werden kann.

Die beiden Gehäuseschalen (Gehäuseoberteil und Gehäuseunterteil) können beispielsweise mit Hilfe einer Schnalle oder einer lösbaren Schraubverbindung zusammengehalten werden.

In einer Ausführungsform kann zum Öffnen des Gehäuses das Gehäuseoberteil um ein zwischen Gehäuseoberteil und Gehäuseunterteil angeordnetes Schwenklager geschwenkt und aufgeklappt werden, wodurch das Stützrohr zugänglich wird.

In einer Ausführungsform ist insbesondere seitlich an dem Gehäuseoberteil und/oder dem Gehäuseunterteil eine Lufteinlassöffnung für eine Zyklonfilterstufe vorgesehen. Die Zyklonfilterstufe ist bevorzugt als Vorabscheider in das/die Gehäuseteil(e) integriert. Die Zyklonfilterstufe ist insbesondere durch mindestens eine Inline-Zyklonzelle gebildet, der über ein Rohr mit einem einlasseitigen Leitwerk zum Versetzen der Luftströmung in einer Drehbewegung und einem auslassseitigen Tauchrohr zum Abtrennen der radial außen befindlichen Strömungsbereiche mit höherem Partikelanteil sowie eine Abscheideöffnung zum Austrag der so abgeschiedenen Partikel verfügt. Besonders bevorzugt ist die Zyklonfilterstufe so angeordnet, dass die aus ihm austretende Strömung nicht direkt auf ein Filterelement gerichtet ist sondern dieses passiert. Dadurch kann eine gleichmäßigere Beladung des Filterelements erreicht werden. Weiter bevorzugt kann die aus der Zyklonfilterstufe austretende Strömung das zweite Filterelement passieren und auf eine der Zyklonfilterstufe gegenüberliegende Gehäusewand gerichtet sein. Auch dies kann zu einer gleichmäßigeren Anströmung der Filterelemente beitragen, insbesondere wenn nur eine geringe Anzahl von Inline-Zyklonen als Zyklonfilterstufe verwendet werden.

Die Aufgabe wird ferner durch eine Filteranordnung mit den Merkmalen des Patentanspruchs 9 gelöst. Eine solche Filteranordnung umfasst ein oben beschriebenes Luftfilterelement, welches in ein oben beschriebenes Filtergehäuse eingebaut ist.

In einer Ausgestaltung dieser Filteranordnung ist das Filterelement vollständig und formschlüssig im Stützkörper aufgenommen. Bei einer solchen vollständigen Aufnahme des Filterelements im Stützkörper umschließt der Stützkörper das Filterelement von außen, so dass das obere Ende des Filterelements unterhalb der Oberkante des Stützrohrs liegt. Somit ragt das obere Ende des Filterelements nicht aus dem Stützrohr heraus, so dass auch das obere Ende des Filterelements nicht von Hand zu fassen ist und eine werkzeuglose Entnahme nicht, oder nur schwer, möglich ist.

In einer weiteren Ausgestaltung der Filteranordnung ist weiterhin ein zweites zylindrisches Filterelement vorgesehen. Das zweite Filterelement weist bevorzugt einen zickzackförmig gefalteten Filterbalg aus einem faserigen Filtermedium auf, der zu einem Ring geschlossen ist. Der Stützkörper bildet insbesondere ein Mittelrohr des zweiten zylindrischen Filterelements, wodurch eine radiale Abstützung des Filterbalges nach innen gewährleistet werden kann. Es kann somit eine mehrstufige Filterung verwirklicht werden, wobei das zweite Filterelement bevorzugt zuerst von außen (Rohseite) nach innen (Reinseite) durchströmt wird und als Hauptfilterelement zur Filterung relativ grober Partikel dient und das erste Filterelement als sekundäres Filterelement zur Filterung relativ kleiner Partikel dient. Dabei kann das erste Filterelement mit Hilfe einer Steck-Dreh-Bewegung fixierbar sein. Das zweite Filterelement kann auf den Stützkörper aufsteckbar sein. Wenn der Stützkörper ein Mittelrohr des zweiten Filterelements (Hauptfilterelements) bildet, dann kann dieses zweite Filterelement einfacher aufgebaut sein, da es nicht ein eigenes Mittelrohr aufweisen muss. Das zweite Filterelement kann auf das erste Filterelement bzw. den Stützkörper aufsteckbar ausgebildet sein, also ohne Werkzeug zu montieren bzw. entnehmen sein. Bevorzugt weist das zweite Filterelement eine Endscheibe mit einer Abströmöffnung und einer Dichtung auf, welche zur Abdichtung gegenüber dem ersten Filterelement oder dem Stützkörper dient. Diese Dichtung ist bevorzugt als radiale Dichtung ausgebildet, die ringförmig ausgebildet ist und mit einer zylindrischen Dichtfläche des ersten Filterelements oder des Stützkörpers derart in Eingriff bringbar ist, dass die Rohseite von der Reinseite getrennt ist. Weiter bevorzugt weist das zweite Filterelement eine zweite, geschlossene Endscheibe auf.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Kurze Beschreibung der Zeichnungen

Nachfolgend ist die Erfindung unter Bezugnahme auf die beiliegende Zeichnung und anhand von speziellen Ausführungsformen als Ausführungsbeispiele näher beschrieben. Es zeigen:
- Fig. 1:: eine perspektivische Ansicht einer Filteranordnung,
- Fig. 2:: eine perspektivische Ansicht eines Filterelements sowie einer unteren Gehäuseschale, in die das Filterelement eingebaut ist,
- Fig. 3: eine angeschnittene Ansicht des Filterelements und der Gehäuseschale in Fig. 2,
- Fig. 4:: in einer Detailansicht die Verbindung des Filterelements mit der Gehäuseschale,
- Fig. 5:: eine perspektivische Ansicht der unteren Gehäuseschale des Filtergehäuses, und
- Fig. 6:: eine perspektivische Ansicht einer unteren Gehäuseschale und eines Hauptfilterelements einer Filteranordnung.

In den Figuren sind gleiche oder funktionsgleiche Elemente, sofern nichts anderes angegeben ist, mit denselben Bezugszeichen versehen.

### Ausführungsform(en) der Erfindung

Die Erfindung ist nachfolgend anhand eines Filters für die Verbrennungsluft einer Brennkraftmaschine, wie beispielsweise ein Kraftfahrzeug, beschrieben. Entsprechende Filterelemente können anstelle einer Filterung von Luft beispielsweise zur Filterung eines anderen gasförmigen oder auch eines flüssigen Mediums, wie beispielsweise Öl, ausgestaltet sein kann.

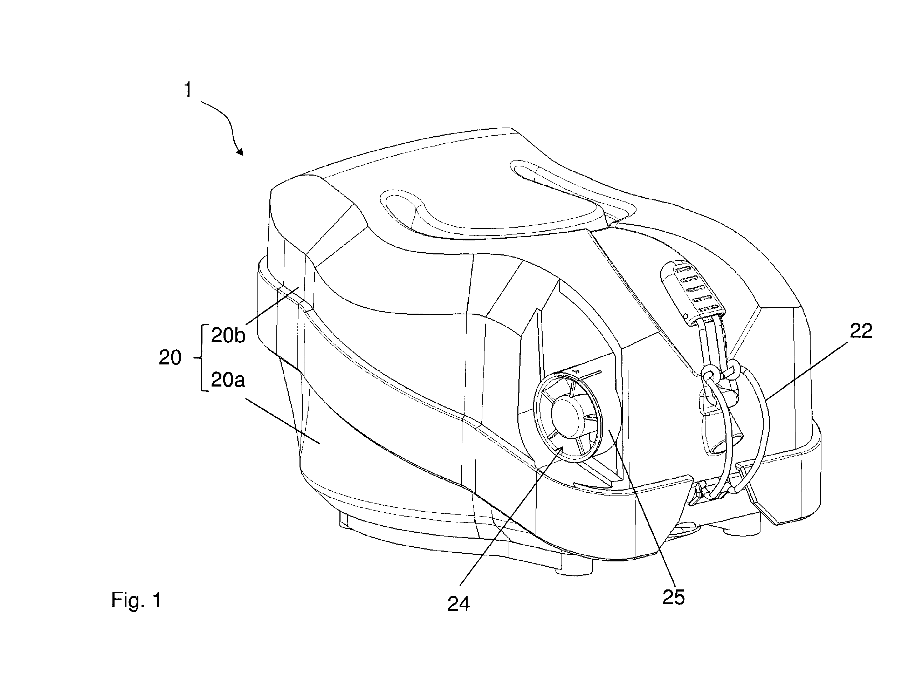

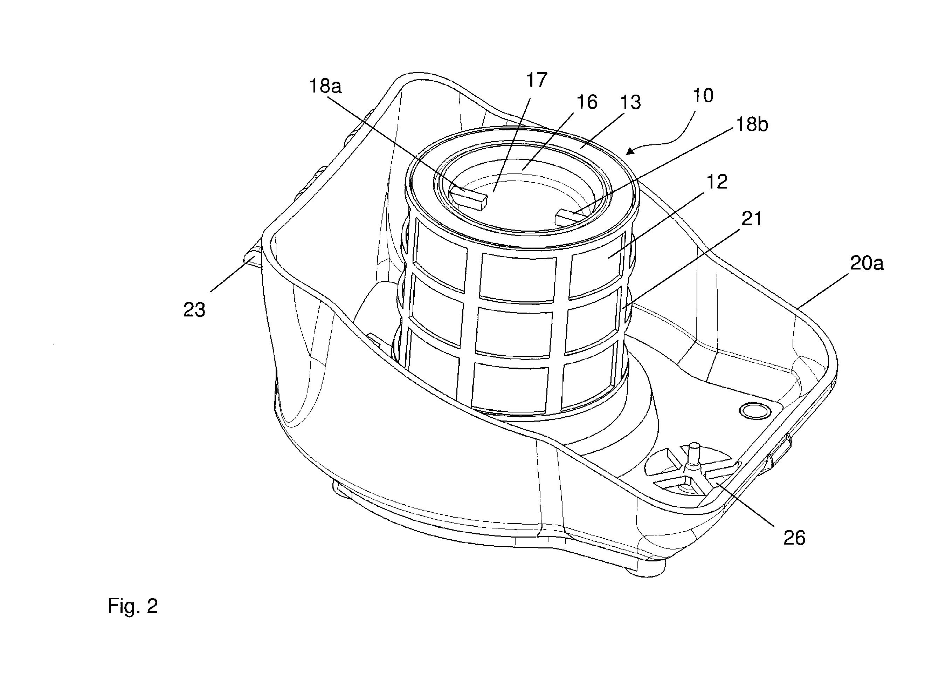

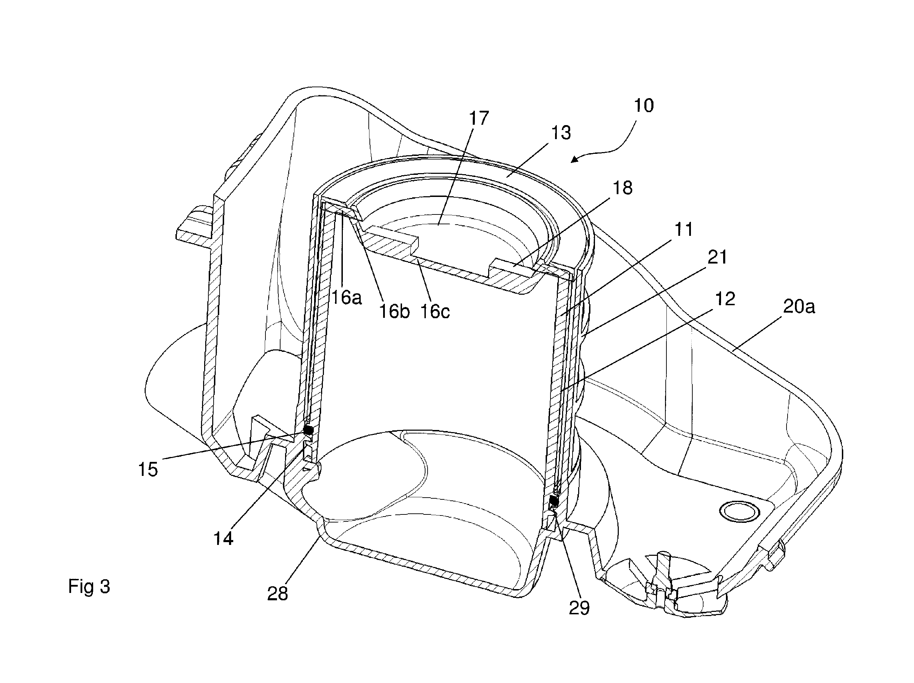

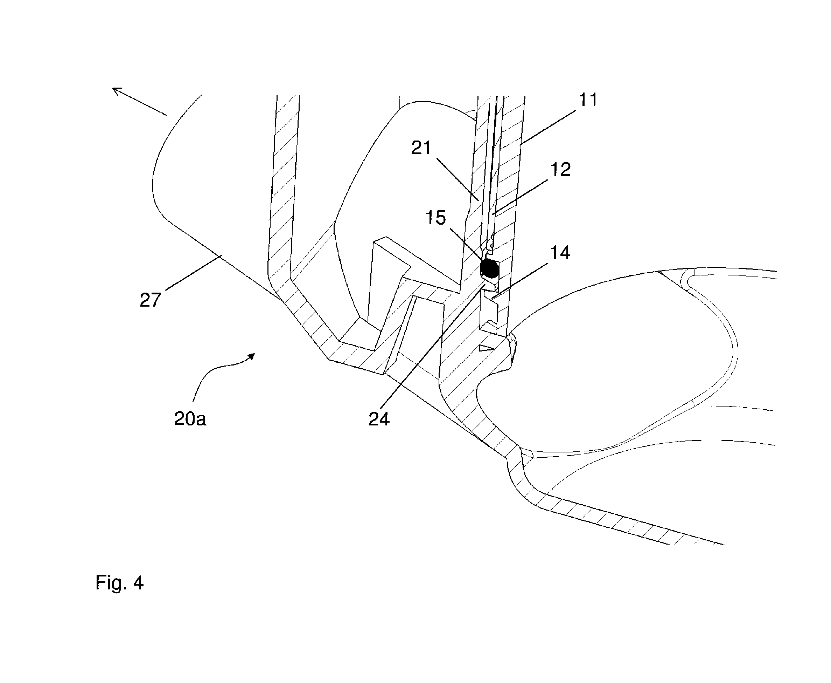

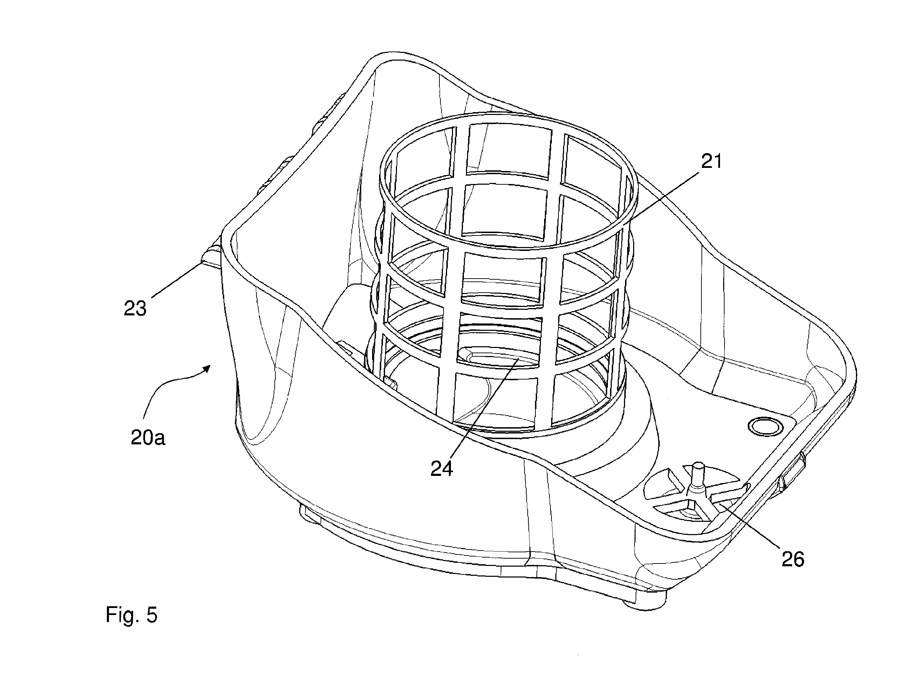

Im Folgenden wird anhand der Fign. 1 bis 5 eine Filteranordnung 1 mit einem Filterelement 10 gemäß einem Ausführungsbeispiel beschrieben. Fig. 1 ist eine perspektivische Ansicht einer Filteranordnung 1. Fig. 2 ist eine perspektivische Ansicht einer unteren Gehäuseschale 20a eines fluiddichten Gehäuses 20 der Filteranordnung, in welcher das Filterelement 10 eingebaut ist. Fig. 3 ist eine angeschnittene Ansicht des Filterelements 10 und der Gehäuseschale 20a in Fig. 2. Fig. 4 zeigt in einer Detailansicht die Verbindung des Filterelements 10 mit der Gehäuseschale 20a. Fig. 5 ist eine perspektivische Ansicht der unteren Gehäuseschale 20a des Filtergehäuses 20.

Es sollte beachtet werden, dass die Ausdrücke "oben" und "unten" sich hierbei auf die Orientierung in den Figuren beziehen, und nicht notwendigerweise auf die Orientierung der Filteranordnung 1 im eingebauten Zustand.

Die als Luftfilter ausgebildete Filteranordnung 1 dieses Ausführungsbeispiels weist ein Filterelement 10 auf (vgl. Fign. 2 bis 4), welches in einem Filtergehäuse 20 aus Kunststoff oder dergleichen aufgenommen ist. Das Filtergehäuse 20 weist eine untere Gehäuseschale 20a mit einem Stützrohr 21 und eine obere Gehäuseschale 20b auf.

Die beiden Gehäuseschalen 20a und 20b können mit Hilfe einer Schnalle 22 zusammengehalten werden. Bei geöffneter Schnalle 22 kann die Gehäuseschale 20b um ein am oberen Ende der rückwärtigen Wand der unteren Gehäuseschale 20a ausgebildetes Schwenklager 23 geschwenkt und aufgeklappt werden, wodurch das Stützrohr 21 zugänglich wird. In das Stützrohr 21 kann in der unten näher beschriebenen Weise das Filterelement 10 aufgenommen und befestigt werden.

Seitlich an der oberen Gehäuseschale 20b ist eine Lufteinlassöffnung 24 für eine Zyklonfilterstufe 25 vorgesehen. Die Zyklonfilterstufe 25 ist in die obere Gehäuseschale 20b integriert. Durch die Lufteinlassöffnung 24 wird die von Partikeln zu filternde Luft in die Zyklonfilterstufe 25 gefördert. In der Zyklonfilterstufe 25 werden zunächst Partikel aus der Luft mittels einer Zyklonabscheidung abgeschieden. Die Partikel können über eine Abscheideöffnung 26 entnommen werden. Die Zyklonfilterstufe ist insbesondere durch mindestens einen Inline-Zyklon gebildet, der über ein Rohr mit einem einlasseitigen Leitwerk zum Versetzen der Luftströmung in einer Drehbewegung und einem auslassseitigen Tauchrohr zum Abtrennen der radial außen befindlichen Strömungsbereiche mit höherem Partikelanteil verfügt. Besonders bevorzugt ist die Zyklonfilterstufe so angeordnet, dass die aus ihm austretende Strömung nicht direkt auf ein Filterelement gerichtet ist sondern dieses passiert. Dadurch kann eine gleichmäßigere Beladung des Filterelements erreicht werden. Weiter bevorzugt kann die aus der Zyklonfilterstufe austretende Strömung das zweite Filterelement passieren und auf eine der Zyklonfilterstufe gegenüberliegende Gehäusewand gerichtet sein. Auch dies kann zu einer gleichmäßigeren Anströmung der Filterelemente beitragen, insbesondere wenn nur eine geringe Anzahl von Inline-Zyklonen als Zyklonfilterstufe verwendet werden.

Die so vorgereinigte Luft tritt dann durch das im Stützrohr 21 vorgesehene Filterelement 10 und wird von dem darin vorgesehenen Filtermaterial gereinigt. Die gereinigte Luft verlässt das Gehäuse schließlich durch einen Luftaustrittsstutzen 27 (vgl. Fig. 4) am Boden der unteren Gehäuseschale 20a unterhalb des Stützrohrs 21. Die gereinigte Luft kann zur Brennkraftmaschine eines KFZs oder dergleichen geführt werden.

Wie insbesondere aus der Fig. 3 ersichtlich ist, umfasst das Filterelement 10 ein zylindrisches Mittelrohr 11, dessen zylindrische Außenfläche von einem Filtermaterial 12 umgeben ist, welches mit einer ersten Dichtung 13 am oberen Ende des Mittelrohrs 11 befestigt ist. Das Filterelement 10 ist in das Stützrohr 21 eingepasst. Das Stützrohr 21 ist ein zylindrischer, gitterförmiger Stützkörper, welcher einstückig mit der unteren Gehäuseschale 20a ausgebildet ist. Das untere Ende des Stützrohrs 21 schließt sich dabei an einen im Boden der unteren Gehäuseschale 20a ausgebildeten topfförmigen Abschnitt der unteren Gehäuseschale 20a an, wodurch die Filteranordnung 1 mit größerer Stabilität versehen ist.

An seinem unteren Ende weist das Mittelrohr 11 Befestigungsmittel zum Befestigen des Filterelements 10 an der Gehäuseschale 20a auf. Diese filterseitigen Befestigungsmittel sind im dargestellten Ausführungsbeispiel als Gewinde 14 ausgebildet. Zwischen dem Gewinde 14 und dem Filtermaterial 12 ist eine zweite Dichtung 15 angeordnet. Die filterseitigen Befestigungsmittel wirken mit gehäuseseitigen Befestigungseinrichtungen zusammen, um das Filterelement 10 im Stützrohr 21 zu fixieren. Genauer gesagt ist gehäuseseitig am unteren Ende des Stützrohres 21 ein Gewinde 29 vorgesehen. Das Filterelement 10 kann somit im Stützrohr 21 mittels einer Steck-Dreh-Bewegung fixiert werden. Hierzu wird es zunächst in axialer Richtung in das Stützrohr 21 geschoben, bis das filterseitige Gewinde 14 auf dem gehäuseseitigen Gewinde 29 aufliegt. Durch Verdrehen des Filterelements 10 wird das Filterelement 10 mit dem Stützrohr 21 verschraubt. Die Gewinde 14 und 29 müssen dabei nicht um den gesamten Umfang des Mittelrohrs 11 bzw. des Stützrohres 21 vorgesehen sein, sondern können auch als mehrere abschnittsweise Vorsprünge entlang des Umfangs ausgebildet sein. Insbesondere können die Gewinde 14 und 29 derart ausgebildet sein, dass das Filterelement 10 durch eine Drehung um einen relativ kleinen Winkel, z.B. einen Winkel nicht größer 90° oder nicht größer 45° im Stützrohr 21 fixiert werden kann. Somit wird eine schnelle Fixierung des Filterelements 10 ermöglicht. Anstelle der oben beschriebenen Schraubverbindung kann das Filterelement 10 auch mit Hilfe einer Bajonett-, Rast- und/oder Schnappverbindung im Stützrohr 21 fixiert werden. Auch bei derartigen Verbindungen wird das Filterelement 10 durch eine Steck-Dreh-Bewegung im Stützrohr 21 fixiert.

Am oberen Ende des Mittelrohrs 11 ist eine Endscheibe 16 vorsehen, welche das Mittelrohr 11 luftdicht abschließt. Im dargestellten Ausführungsbeispiel sind das Mittelrohr 11 und die Endscheibe 16 einstückig ausgebildet, es ist aber auch möglich, die Endscheibe als separates Element vorzusehen. In der Endscheibe 16 ist eine wannenförmige Vertiefung 17 vorgesehen, welche im dargestellten Beispiel die Form eines umgedrehten kreisrunden Kegelstumpfes hat. Die Endscheibe 16 weist einen ersten ringförmigen Abschnitt 16a auf, der an die zylindrische Wand des Mittelrohrs 11 anschließt und im rechten Winkel dazu radial nach innen verläuft. An das innere Ende dieses ersten ringförmigen Abschnitts 16a schließt sich ein zweiter ringförmiger Abschnitt 16b an, der mit dem ersten ringförmigen Abschnitt 16a einen Winkel von beispielsweise 110 bis 160 Grad, z.B. etwa 135 Grad, bildet. An diesen zweiten Abschnitt 16b schließt sich ein scheibenförmiger dritter Abschnitt 16c an, der zusammen mit dem zweiten Abschnitt 16b die Vertiefung 17 bildet. Die erste Dichtung 13 ist ebenfalls ringförmig ausgebildet, und umgreift den ersten Abschnitt 16a der Endscheibe sowie das daran angelegte Ende des Filtermaterials 12, wodurch das Filtermaterial 12 am Ende des Mittelrohrs 11 fixiert wird. Als Material für die erste Dichtung 13 ist Schaum aus Polyurethanen (PU) bzw. PUR-Schaum verwendbar.

Das Luftfilterelement 10 ist mit einer Drehmomentübertragungseinrichtung zur Übertragung eines Drehmoments von einem Werkzeug an das Luftfilterelement versehen. Hierzu ist am inneren Rand der Vertiefung 17, also an der Stelle, an der der zweite Abschnitt 16a auf den dritten Abschnitt 16c trifft, mindestens ein sich in radialer Richtung erstreckender Vorsprung 18 vorgesehen. In der dargestellten Ausführungsform sind als Drehmomentübertragungseinrichtung zwei Vorsprünge 18a und 18b vorgesehen, welche sich vom Rand der Vertiefung 17 bis zu einem Ort erstrecken, der in etwa in der Mitte zwischen dem Rand der Vertiefung 17 und dem Mittelpunkt der Endscheibe 16 liegt. Diese Vorsprünge 18a und 18b bilden Erhebungen, die sich vom Boden der Vertiefung 17 bis zu einer Höhe, die unterhalb des oberen Rands der Endscheibe 16 liegt, erheben. In der in Fig. 2 dargestellten Ausführungsform sind die zwei Vorsprünge 18a und 18b im Wesentlichen quaderförmig, und an gegenüberliegenden Stellen des Rands, also an um 180 Grad verschobenen Winkelpositionen vorgesehen.

Mit Hilfe der Vorsprünge 18a und 18b kann das Filterelement 10 im Stützrohr 21 montiert bzw. davon gelöst werden. Zur Montage wird das Filterelement 10 in der oben beschriebenen Weise in das Stützrohr 21 geschoben, bis die Gewinde 14 und 29 aufeinanderliegen. Mit einem nicht näher dargestellten Spezialwerkzeug kann das Filterelement 10 nun verdreht und fixiert werden. Hierzu wird das Spezialwerkzeug in die Vertiefung 17 eingeführt und gedreht, wodurch es seitlich gegen die Seitenflächen der Vorsprünge 18a und 18b gedrückt wird. Die Vorsprünge 18a und 18b nehmen dabei das Drehmoment des Spezialwerkzeugs auf und übertragen es an das Filterelement 10. Es besteht keine Einschränkung hinsichtlich der Ausgestaltung des Spezialwerkzeugs, außer derjenigen, dass es geeignet sein muss, ein Drehmoment an die Vorsprünge 18a und 18b zu übertragen. Beispielsweise kann am Ende des Spezialwerkzeugs eine rechteckige Klinge, ähnlich der eines Schraubendrehers, vorgesehen sein. Es ist aber ebenso möglich, dass die Form des Spezialwerkzeugs an die Vertiefung 17 angepasst ist, also beispielsweise die Form eines Kegelstumpfes mit Aussparungen für die Vorsprünge 18 hat.

Soll nun, z.B. im Rahmen einer Wartung, das Filterelement 10 vom Stützrohr 21 gelöst werden, so ist hierzu ebenfalls das Spezialwerkzeug notwendig. Im vollständig im Stützrohr 21 aufgenommenen Zustand ist das Filterelement 10 nämlich vom gitterförmigen Stützrohr 21 umgeben, so dass es nicht mit der Hand umgriffen und herausgedreht werden kann. Auch am oberen Ende findet sich kein Angriffspunkt, mit welchem ohne ein Werkzeug ein Drehmoment auf das Filterelement 10 übertragen werden kann. Somit kann das Filterelement 10 nicht, oder nur schwer, per Hand im Stützrohr 21 fixiert oder davon gelöst werden. Dadurch wird ein sachgemäßer Austausch des Filterelements 10 sichergestellt, da das notwendige Spezialwerkzeug in der Regel nur Vertragswerkstätten oder -händlern, oder entsprechend autorisiertem oder fachkundigem Wartungspersonal zur Verfügung steht.

Die Seitenflächen der Vorsprünge 18 bilden einen Winkel von z.B. 75 bis 105 Grad, und vorzugsweise im Wesentlichen 90 Grad mit dem Boden der Vertiefung. Die Seitenflächen der Vorsprünge 18 erstrecken sich im Wesentlichen in radialer Richtung vom Rand der Vertiefung 17 in Richtung zur Zylinderachse des Mittelrohrs 11 hin. Somit kann eine große Kontaktfläche zwischen dem Spezialwerkzeug und den Vorsprüngen 18 sichergestellt werden, und ein Abrutschen des Spezialwerkzeugs auf den Vorsprüngen 18 vermieden werden. Ferner wird durch das Vorsehen der Vorsprünge 18 am Rand der Vertiefung, also möglichst weit von der Drehachse entfernt, eine effiziente Drehmomentübertragung sichergestellt.

Das Filtergehäuse 20 dieser Ausführungsform kann werkzeuglos geöffnet und verschlossen werden. Der Schnallenverschluss erlaubt dabei eine schnelle einhändige Bedienung. Da das Stützrohr 21 gitterförmig ausgebildet ist und bis zum Ende des Filterelements 10 reicht, ist hingegen ein werkzeugloser Ein- bzw. Ausbau des Filterelements 10, wie oben beschrieben, nicht möglich. Es ist somit ein Spezialwerkzeug zum Ein- bzw. Ausbau des Filterelements 10 nötig, was eine sachgemäße Wartung sicherstellt. Diese kann jedoch mit wenigen Handgriffen erfolgen, da das Filtergehäuse 20 einhändig geöffnet werden kann, und das Filterelement 10 mit einer einfachen Steck-Dreh-Bewegung fixiert werden kann.

Im dargestellten Beispiel sind zwei Vorsprünge 18 vorgesehen, es ist jedoch auch möglich, mehr als zwei Vorsprünge 18 vorzusehen. Ebenso ist es auch möglich, lediglich einen durchgehenden Vorsprung vorzusehen, der sich vom Rand auf einer Seite entlang dem Mittelpunkt der Endscheibe 16 bis zum gegenüberliegenden Rand der Vertiefung 17 erstreckt. Ferner ist es auch möglich, die zwei Vorsprünge 18a und 18b nicht gegenüber voneinander, sondern beispielsweise im Winkel von 90 Grad entlang dem Rand der Vertiefung 17 vorzusehen. Dies erfordert eine entsprechende Ausgestaltung des Spezialwerkzeugs und verhindert, dass dieses durch eine einfache rechteckige Klinge oder dergleichen ersetzt werden kann.

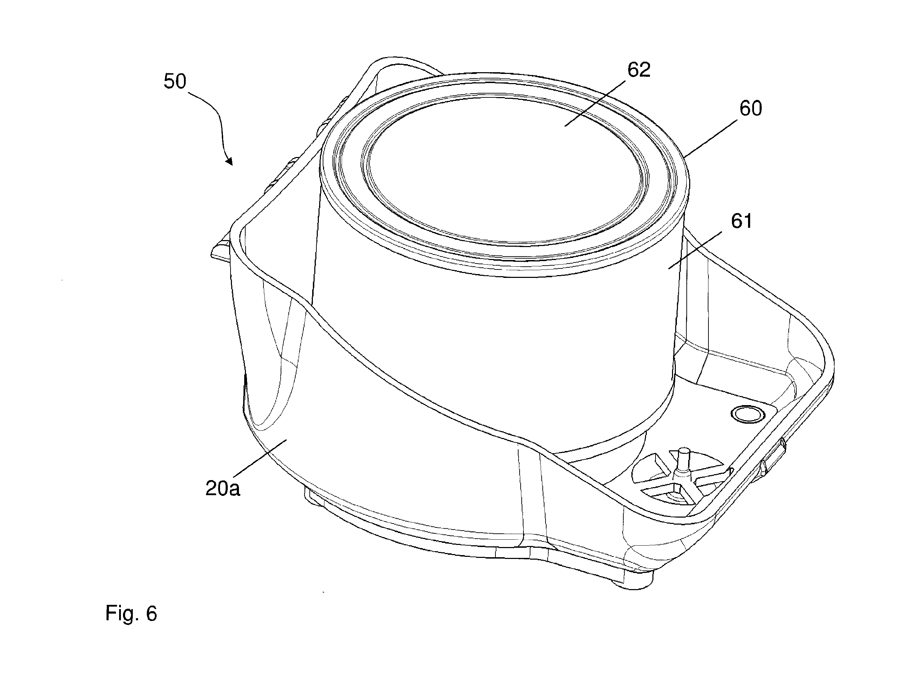

Die Filteranordnung 1, die das Filtergehäuse 20 und das Filterelement 10 umfasst, bewirkt eine zweistufige Filterung aus einer Zyklonvorfilterung mit der Zyklonfilterstufe 25 und einer Hauptfilterung mit dem Filterelement 10. Es ist jedoch auch möglich, noch mehr Filterstufen vorzusehen. Eine solche Filteranordnung 50 ist schematisch in Fig. 6 dargestellt.

Die Filteranordnung 50 gemäß dieses Ausführungsbeispiels weist das oben beschriebene Filtergehäuse 20, ein nicht näher dargestelltes Sekundärfilterelement sowie ein Hauptfilterelement 60 auf. Als Sekundärfilterelement kann das oben beschriebene Filterelement 10 verwendet werden, so dass bereits oben erläuterte Aspekte des Filtergehäuses 20 und des Filterelements 10 hier nicht erneut erläutert werden. Fig. 6 zeigt lediglich die untere Gehäuseschale 20a des Filtergehäuses 20, sowie das zweite Filterelement 60, welches auf das Stützrohr 21 gesteckt ist.

In der dargestellten Anordnung dient das Filterelement 60 als Hauptfilterelement einer Filteranordnung 50, die das Hauptfilterelement 60 und das Sekundärfilterelement umfasst. Auch das Hauptfilterelement 60 ist zylindrisch und weist ein nicht näher dargestelltes, gitterförmiges zylindrisches Mittelrohr auf, welches von einem Filtermaterial 61 ummantelt ist. Am Ende des Mittelrohrs ist eine Endscheibe 62 aus Polyurethanen (PU) bzw. PUR-Schaum vorgesehen, welche das zylindrische Mittelrohr luftdicht abschließt.

Das Filtermaterial 61 des Hauptfilterelements 60 ist zur Filterung von gröberen Partikeln und das Filtermaterial des Sekundärfilterelements ist zur Filterung von feineren Partikeln aus der Luft ausgelegt.

Nach der Vorfilterung mit der Zyklonfilterstufe 25 durchdringt die zu filternde Luft das Filtermaterial 61 des Hauptfilterelements 60, tritt durch das Stützrohr 21 hindurch und durchdringt dann das Filtermaterial des Sekundärfilterelements, um dann durch die Luftausgangsöffnung am Boden der unteren Gehäuseschale 20a nach außen geleitet zu werden. Es wird somit eine dreistufige Filterung bereitgestellt.

Das Hauptfilterelement 60 kann mit einer einfachen Handbewegung auf das Stützrohr 21 gesteckt bzw. davon entfernt werden, so dass der Austausch schnell und einfach erfolgen kann. Dabei wird durch die Ausgestaltung des Sekundärfilterelements in der oben beschriebenen Weise sichergestellt, dass zum kompletten Austausch der Filteranordnung ein Spezialwerkzeug nötig ist, so dass eine sachgemäße Wartung gewährleistet wird.

In einer vorteilhaften Ausgestaltung kann das Stützrohr 21 gleichzeitig als Mittelrohr des Hauptfilterelements 60 dienen. Somit kann ein weiteres Bauteil eingespart werden, was eine noch kostengünstigere Realisierung der Filteranordnung ermöglicht.

Das oben beschriebene Ausführungsbeispiel ist lediglich beispielhaft, und es sind andere Ausgestaltungen denkbar, die ebenfalls vom Schutzumfang umfasst sein sollen. So kann die Drehmomentübertragungseinrichtung auch als nicht rotationssymmetrische vieleckige Ausnehmung in der Endscheibe vorgesehen sein. Ferner ist es auch möglich, dass als Drehmomentübertragungseinrichtung mehrere Ausnehmungen in der Endscheibe vorgesehen sind. Weiterhin ist es möglich, dass die Drehmomentübertragungseinrichtung als nicht rotationssymmetrische Erhebung oder Erhebungen auf der Endscheibe vorgesehen ist. Auch mit solchen oder anderen Geometrien kann gewährleistet werden, dass die Drehmomentübertragungseinrichtung nach dem Schlüssel-Schloß-Prinzip mit einem Werkzeug zusammenwirkt und ohne dieses nicht, oder nur schwer, montierbar ist.

## Patentansprüche

1. Luftfilterelement (10) mit einem zylindrischen Mittelrohr (11), wobei am einen Ende des Mittelrohrs (11) eine Drehmomentübertragungseinrichtung (18) zur Übertragung eines Drehmoments von einem Werkzeug an das Luftfilterelement (10) vorgesehen ist, und am anderen Ende des Mittelrohrs (11) eine Befestigungseinrichtung (14) zum lösbaren Einbau des Filterelements (10) in einen zylindrischen Stützkörper (21) mittels einer Steck-Dreh-Bewegung vorgesehen ist.

2. Luftfilterelement (10) nach Anspruch 1, wobei die Drehmomentübertragungseinrichtung (18) als eine in Bezug auf die Zylinderachse des Mittelrohrs (11) nicht rotationssymmetrische Erhebung oder Ausnehmung ausgebildet ist.

3. Luftfilterelement (10) nach Anspruch 1 oder 2, wobei an dem einen Ende des Mittelrohrs (11) eine Endscheibe (16) vorgesehen ist, die eine wannenförmige Vertiefung (17) aufweist, an dessen Boden die Drehmomentübertragungseinrichtung (18) vorgesehen ist.

4. Luftfilterelement (10) nach Anspruch 3, wobei die Drehmomentübertragungseinrichtung (18) mindestens zwei Erhebungen aufweist, die einander gegenüberliegend am Rand der Vertiefung (17) vorgesehen sind.

5. Luftfilterelement (10) nach einem der Ansprüche 1 bis 4, wobei die Endscheibe (16) und das Mittelrohr (11) einstückig ausgebildet sind.

6. Filtergehäuse (20) zur Aufnahme eines Luftfilterelements (10) nach einem der Ansprüche 1 bis 5, mit einem Gehäuseoberteil (20b) und einem lösbar mit dem Gehäuseoberteil (20b) verbindbaren Gehäuseunterteil (20a), wobei am Gehäuseunterteil (20a) ein luftdurchlässiger zylindrischer Stützkörper (21) vorgesehen ist, an dessen dem Gehäuseunterteil (20a) zugewandten Ende eine mit der filterseitigen Befestigungseinrichtung (14) des Luftfilterelements (10) zusammenwirkende gehäuseseitige Befestigungseinrichtung (24) zur Befestigung des Luftfilterelements (10) mittels einer Steck-Dreh-Bewegung vorgesehen ist.

7. Filtergehäuse (20) nach Anspruch 6, wobei das Gehäuseunterteil (20a) einstückig mit dem zylindrischen Stützkörper (21) ausgebildet ist.

8. Filtergehäuse (20) nach Anspruch 6 oder 7, wobei der zylindrische Stützkörper (21) als luftdurchlässiges Gitter ausgebildet ist.

9. Filteranordnung (40), insbesondere für ein tragbares Handarbeitsgerät, mit einem Luftfilterelement (10) gemäß einem der Ansprüche 1 bis 5, welches in ein Filtergehäuse (20) gemäß einem der Ansprüche 6 bis 8 eingebaut ist.

10. Filteranordnung (40) nach Anspruch 9, wobei das Filterelement (10) vollständig und formschlüssig im Stützkörper (21) aufgenommen ist.

11. Filteranordnung (40) nach Anspruch 9 oder 10, weiterhin aufweisend ein zweites zylindrisches Filterelement (60), wobei der Stützkörper (21) ein Mittelrohr des zweiten zylindrischen Filterelements (60) bildet.
